# EUROPÄISCHE PATENTSCHRIFT

(11) **EP 0 787 110 B1**
(45) Veröffentlichungstag und Bekanntmachung des Hinweises auf die Patenterteilung: **13.06.2001**
(21) Anmeldenummer: 96902255.7
(22) Anmeldetag: 30.01.1996
(51) Int. Cl.: C03B 7/16

(54) **RINNENEINRICHTUNG FÜR EINE I.S.-GLASFORMMASCHINE**
CONDUIT ARRANGEMENT FOR AN I.S. GLASS MOULDING MACHINE
STRUCTURE DE CONDUITS POUR MACHINE A MOULER LE VERRE A SECTION INDIVIDUELLE

(30) Priorität: 26.05.1995 DE 29508465 U
(43) Veröffentlichungstag der Anmeldung: 06.08.1997
(73) Patentinhaber: FIRMA HERMANN HEYE, D-31683 Obernkirchen (DE)
(72) Erfinder: GRAEFE, Andreas, D-31691 Seggebruch (DE); MÖLLER, Eckhard, D-31683 Obernkirchen (DE); STRUCKMEIER, Manfred, D-31683 Obernkirchen (DE)
(74) Vertreter: Kosel, Peter, Dipl.-Ing.
(86) Internationale Anmeldenummer: EP9600348
(87) Internationale Veröffentlichungsnummer: WO9637445

(56) Entgegenhaltungen:
- EP-A- 0 480 642
- EP-A- 0 564 090
- EP-A- 0 650 935
- EP-A- 0 654 451
- EP-A- 0 658 518
- US-A- 1 575 370
- US-A- 1 670 770
- US-A- 1 755 397
- US-A- 2 669 805
- US-A- 2 810 236
- US-A- 3 341 315

## Beschreibung

Die Erfindung betrifft eine Rinneneinrichtung nach dem Oberbegriff des Anspruchs 1.

Bei einer bekannten Vorrichtung dieser Art (WO-A1-92/20631 der Anmelderin) ist zwischen jedem Gleitkörper und der zugehörigen Endrinne eine Langrinne angeordnet. Jede Langrinne ist mit ihrem oberen Ende über ein Universalgelenk an einer maschinenfesten Halterung abgestützt. Das untere Ende jeder Langrinne ist in einem senkrechten Schacht der Endrinne geführt und zur Anpassung an die jeweilige Tropfenform durch eine Stellvorrichtung heb- und senkbar, wodurch sich die Winkel der Langrinne einerseits zu ihrem Gleitkörper und andererseits zu ihrer Endrinne verändern.

Aus der US-A-5 298 049 ist es an sich bekannt, ein Rinnensystem aus einer schwenkbaren Scooprinne sowie im Betrieb stationären, konventionellen Langrinnen und Endrinnen zu kombinieren. Jede Endrinne ist ausschließlich in einer waagerechten Ebene relativ zu der zugehörigen Form einstellbar (Spalte 1, Zeile 60 bis 63; Spalte 3, Zeile 54 bis 57). Jede Langrinne ist nur an ihrem oberen Ende maschinenfest abgestützt, während ihr unteres Ende und die gesamte zugehörige Endrinne durch einen gemeinsamen Halter getragen werden. Der Halter ist zur Erleichterung der Einstellung der Endrinne um zwei zueinander rechtwinklige waagerechte Achsen und um eine senkrechte Achse in Grenzen beweglich über ein Universalgelenk an einem maschinenfesten Träger abgehängt.

Aus der US-A-1 670 770 sind Rinnensysteme an sich bekannt, die jeweils eine Scooprinne und eine einstellbar montierte Langrinne und Endrinne (Seite 1, Zeile 82 und 83) aufweisen. Einzelheiten dieser Einstellbarkeit sind nicht offenbart.

Aus der US-A-5 213 602 ist ein Rinnensystem mit einer Scooprinne, einer Langrinne und einer Endrinne an sich bekannt. Die Langrinne ist oben mit einem Zapfen schwenkbar am Maschinenrahmen angelenkt. Das untere Ende der Langrinne ruht, durch eine Stellschraube höheneinstellbar, in einem Schlitten. Der Schlitten ist durch eine Stellschraube waagerecht an dem Maschinenrahmen verschiebbar. Eine Spindel des Schlittens erstreckt sich im wesentlichen parallel zu der Langrinne und trägt die entlang der Spindel einstellbare Endrinne.

Das aus der US-A-1 755 397 an sich bekannte Rinnensystem aus Scooprinne, Langrinne und Endrinne entspricht demjenigen, das in der US-A-1 670 770 offenbart ist (Seite 2, Zeile 25 bis 30).
Der Erfindung liegt die Aufgabe zugrunde, vergleichsweise kurze Langrinnen ganz zu vermeiden.

Diese Aufgabe ist durch die Merkmale des Anspruchs 1 gelöst. Vergleichsweise kurze Langrinnen können insbesondere für mittlere Sektionen größerer I.S.-Glasformmaschinen erforderlich sein. Wenn bei solchen vergleichsweise kurzen Langrinnen deren unteres Ende zur Anpassung an andere Tropfendurchmesser gehoben oder gesenkt werden muß, führt dies zu den vorerwähnten Winkeländerungen der Langrinne einerseits zu ihrem Gleitkörper und andererseits zu ihrer Endrinne hin. Dies hat aufgrund der Kürze der Langrinnen besonders große Winkeländerungen und entsprechend störende Knickstellen in der Bewegungsbahn der Tropfen zur Folge. Entsprechend negativ sind die Einwirkungen auf den Tropfen. Durch die Merkmale des Anspruchs 1 sind diese Nachteile behoben. In dieser neuen Weise können ohne Langrinnen sämtliche Rinnensysteme einer I.S.-Glasformmaschine mit nur verhältnismäßig wenigen Sektionen, z.B. mit vier bis sechs Sektionen, ausgebildet sein. Durch die zweite Stelleinrichtung ist die Anpassung des Rinnensystems an sich ändernde Tropfenabmessungen erleichtert.

Gemäß Anspruch 2 kann aber auch nur wenigstens eine mittennahe Sektion der I.S.-Glasformmaschine in der erfindungsgemäßen Weise ausgestattet sein.

Die Merkmale des Anspruchs 3 bringen fertigungstechnische und betriebliche Vorteile.

Die Merkmale des Anspruchs 4 sind konstruktiv und bedienungstechnisch günstig.

Mit den Merkmalen des Anspruchs 5 ergibt sich eine sichere Halterung der Endrinne. In der Regel genügt es, zwei Lagerbereiche je Endrinne vorzusehen.

Gemäß Anspruch 6 ergibt sich eine einfache und doch funktionssichere Lagerung.

Gemäß Anspruch 7 kann die Bewegung des Lagerauges in einer Verschiebung und/oder einer Schwenkung bestehen. Der Antrieb des Kugelkörpers kann in beliebiger, geeigneter Weise von Hand oder auch motorisch erfolgen.

Die Merkmale des Anspruchs 8 erleichtern den Austausch der Endrinne.

Gemäß Anspruch 9 ist für einwandfreie Fluchtung der Endrinne mit ihrem Gleitkörper gesorgt.

Die Merkmale des Anspruchs 10 sind konstruktiv einfach, funktionssicher und bedienungsfreundlich. Vorzugsweise sind die Schenkel der Gabel jeweils auf einer waagerechten Stufe unten an der zugehörigen Gleitfläche abgestützt.

Die Merkmale des Anspruchs 11 erleichtern die Führung der Endrinne durch die Gabel auch bei geringfügigen seitlichen relativen Einstellbewegungen.

Gemäß Anspruch 12 wird die Bedienung der Gabel erleichtert.

Die Merkmale des Anspruchs 13 erleichtern die Einstellung der Endrinne auf den zugehörigen Gleitkörper.

Gemäß Anspruch 14 ist gewährleistet, daß der Tropfen stets in die Endrinne trifft und nicht auf deren oberes Ende aufschlägt.

Die Merkmale des Anspruchs 15 führen unter allen Umständen zu einer sehr schonenden Einspeisung des Tropfens in die Endrinne.

Gemäß jedem der Ansprüche 16 bis 20 kann der Lauf des Tropfens in der Endrinne verbessert werden. Unerwünschte Formänderungen des Tropfens durch seine Berührung mit der Endrinne sind auf ein Minimum reduziert.

Diese und weitere Merkmale und Vorteile der Erfindung werden nachfolgend anhand der in den Zeichnungen dargestellten Ausführungsbeispiele näher erläutert. Es zeigt:
Fig. 1 die Schnittansicht nach Linie I-I in Fig. 2 durch eine Rinneneinrichtung,
Fig. 2 die Draufsicht auf die Rinneneinrichtung gemäß Fig. 1 und weitere, ähnliche Rinneneinrichtungen für weitere Sektionen einer I.S.-Glasformmaschine,
Fig. 3 Antriebe zum Heben oder Senken von Endrinnen der Rinneneinrichtungen,
Fig. 4 eine teilweise geschnittene Ansicht einer unteren Schwenklagerung einer Endrinne,
Fig. 5 die Schnittansicht gemäß Linie V-V in Fig. 4,
Fig. 6 einen Teil der Fig. 2 in vergrößerter Darstellung,
Fig. 7 die Schnittansicht nach Linie VII-VII in Fig. 6,
Fig. 8 die Draufsicht gemäß Linie VIII-VIII in Fig. 7,
Fig. 9 die schematische Draufsicht auf eine I.S.-Glasformmaschine mit gerader Sektionsanzahl,
Fig. 10 die schematische Draufsicht auf eine andere I.S.-Glasformmaschine mit ungerader Sektionsanzahl,
Fig. 11 ein Diagramm eines typischen Verlaufs der auf den Tropfen in einer Endrinne einer mittennahen Sektion einwirkenden Normalbeschleunigung und
Fig. 12 ein Diagramm eines typischen Verlaufs der auf den Tropfen in einer Endrinne einer weiter außen liegenden mittennahen Sektion einwirkenden Normalbeschleunigung.

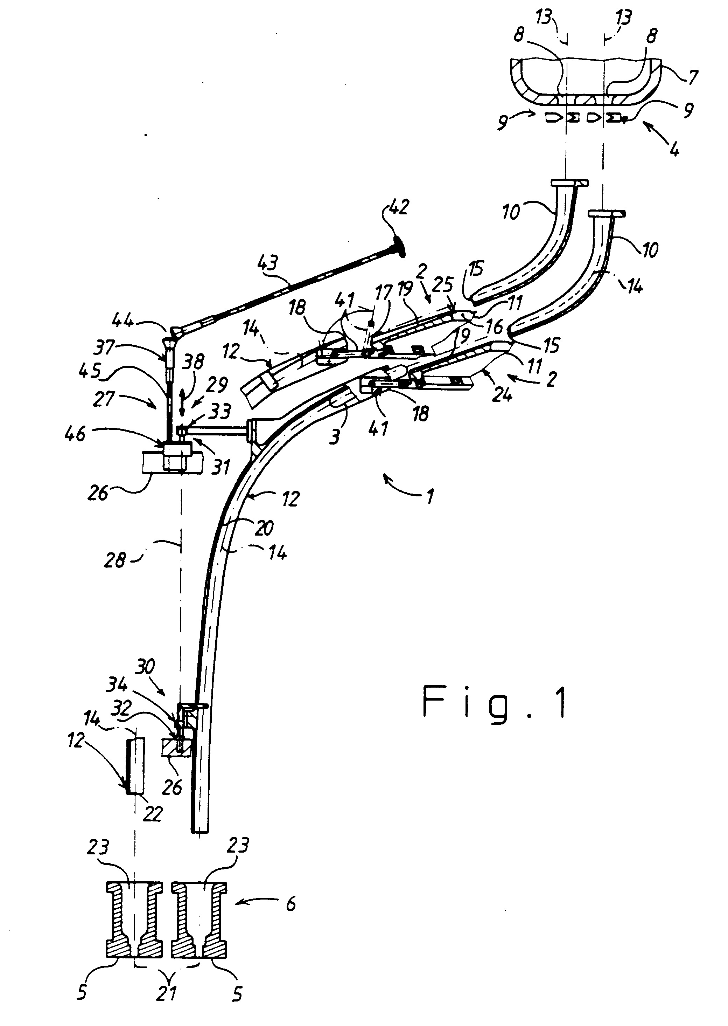

Fig. 1 zeigt schematisch eine Rinneneinrichtung 1 mit zwei gleichen Rinnensystemen 2 zur Leitung von Tropfen 3 schmelzflüssigen Glases von einem Tropfenspeiser 4 jeweils in eine Form 5, insbesondere eine Vorform, einer Sektion 6 einer nicht weiter dargestellten I.S.-Glasformmaschine. Diese I.S.-Glasformmaschine arbeitet also im sogenannten Doppeltropfenbetrieb, in dem nacheinander jeder Sektion 6 etwa zeitgleich zwei Tropfen 3 zugeführt werden. Die Erfindung erstreckt sich gleichermaßen auf I.S.-Glasformmaschinen, deren Sektionen jeweils mehr als zwei Tropfen etwa zeitgleich oder nur ein Tropfen zugeführt wird.

Der Tropfenspeiser 4 weist in an sich bekannter Weise einen Speiserkopf 7 auf, aus dessen Tropfenauslässen 8 jeweils ein Strang schmelzflüssigen Glases austritt, von dem periodisch durch eine Schere 9 die Tropfen 3 abgetrennt werden.

Jedes Rinnensystem 2 weist eine Scooprinne 10, einen Gleitkörper 11 und eine Endrinne 12 auf.

Jede Scooprinne 10 ist in diesem Fall in hier nicht näher dargestellter, an sich bekannter Weise um eine Längsachse 13 des zugehörigen Tropfenauslasses 8 schwenkbar. Die Scooprinne 10 fängt daher sämtliche durch ihre Schere 9 abgetrennten Tropfen 3 auf und leitet sie je nach ihrer Schwenkstellung nacheinander dem Rest der nachfolgenden Rinnensysteme 2 zu. Typisch versorgt jede Scooprinne 10 nacheinander die zugehörigen Rinnensysteme 2 aller Sektionen der I.S.-Glasformmaschine mit Tropfen 3.

Jeder Tropfen 3 durchläuft sein Rinnensystem 2 mit seiner Längsachse entlang einer in Fig. 1 strichpunktiert eingetragenen Bewegungsbahn 14. Die Scooprinne 10 ist gekrümmt und lenkt den Tropfen 3 schräg nach unten um. Zwischen einem unteren Ende 15 der Scooprinne 10 und einem oberen Ende 16 des Gleitkörpers 11 besteht ein Abstand von z.B. 65 mm. In ähnlicher Weise besteht zwischen einem unteren Ende 17 des Gleitkörpers 11 und einem oberen Ende 18 der Endrinne 12 ein Abstand. Der Tropfen 3 überwindet diese Abstände jeweils in freiem Flug und trifft unter einem verhältnismäßig geringen Auftreffwinkel zunächst auf eine schräg nach unten geneigte obere Gleitfläche 19 des Gleitkörpers 11 und sodann auf eine Gleitfläche 20 in der Endrinne 12. Diese Gleitfläche 20 weist einen besonderen Kurvenverlauf auf, auf den später noch genauer eingegangen wird. Die Gleitfläche 20 lenkt den Tropfen 3 nach unten hin koaxial zu einer Längsachse 21 der Form 5 um. Vom unteren Ende 22 der Endrinne 12 bewegt sich der Tropfen 3 also im freien Fall in eine Formausnehmung 23 der Form 5.

Die Rinneneinrichtung 1 gemäß Fig. 1 ist für den zuvor erwähnten Doppeltropfenbetrieb ausgelegt, wo also entlang den beiden Längsachsen 13 im wesentlichen gleichzeitig zwei Tropfen 3 in die zugehörige Scooprinne 10 fallen und durch den Rest des zugehörigen Rinnensystems 2 in die jeweilige Form 5 geleitet werden. Die beiden Rinnensysteme 2 sind im wesentlichen geschachtelt übereinander angeordnet, wobei der Mittelteil der oberen Endrinne 12 zur Verdeutlichung der Darstellung in Fig. 1 fortgelassen ist.

Die Gleitkörper 11 aller unteren Endrinnen 12 sind vorzugsweise zu einer Gleiteinheit 24 miteinander verbunden. In der gleichen Weise sind alle Gleitkörper 11 der oberen Endrinnen 12 vorzugsweise zu einer Gleiteinheit 25 miteinander verbunden. Die Gleiteinheiten 24, 25 sind jeweils maschinenfest abgestützt, wie sich dies aus der eingangs erwähnten WO 92/20631 A1 ergibt und hier nicht noch einmal ausgeführt werden muß.

Jede Endrinne 12 ist durch eine erste Stelleinrichtung 26 getragen, mit der die Endrinne 12 in einer zu der Längsachse 21 der Form 5 rechtwinkligen Ebene einstellbar ist. Die Einzelheiten dieser Einstellung sind ebenfalls in der eingangs erwähnten WO 92/20631 A1 offenbart und werden deshalb hier nicht weiter erläutert.

Jede Endrinne 12 ist ferner durch eine zweite Stelleinrichtung 27 heb- oder senkbar. Dieses Heben oder Senken geschieht vorzugsweise entlang einer senkrechten Stellachse 28 auf einer konvexen Rückseite der zugehörigen Endrinne 12. Entlang der Stellachse 28 sind im Abstand voneinander Lagerbereiche 29 und 30 vorgesehen. Ein erstes Lagerelement 31 und 32 jedes Lagerbereichs 29, 30 ist durch die erste Stelleinrichtung 26 getragen und in der erwähnten Ebene rechtwinklig zu den Längsachsen 21 einstellbar. Ein zweites Lagerelement 33 und 34 jedes Lagerbereichs 29, 30 ist dagegen an der Endrinne 12 befestigt.

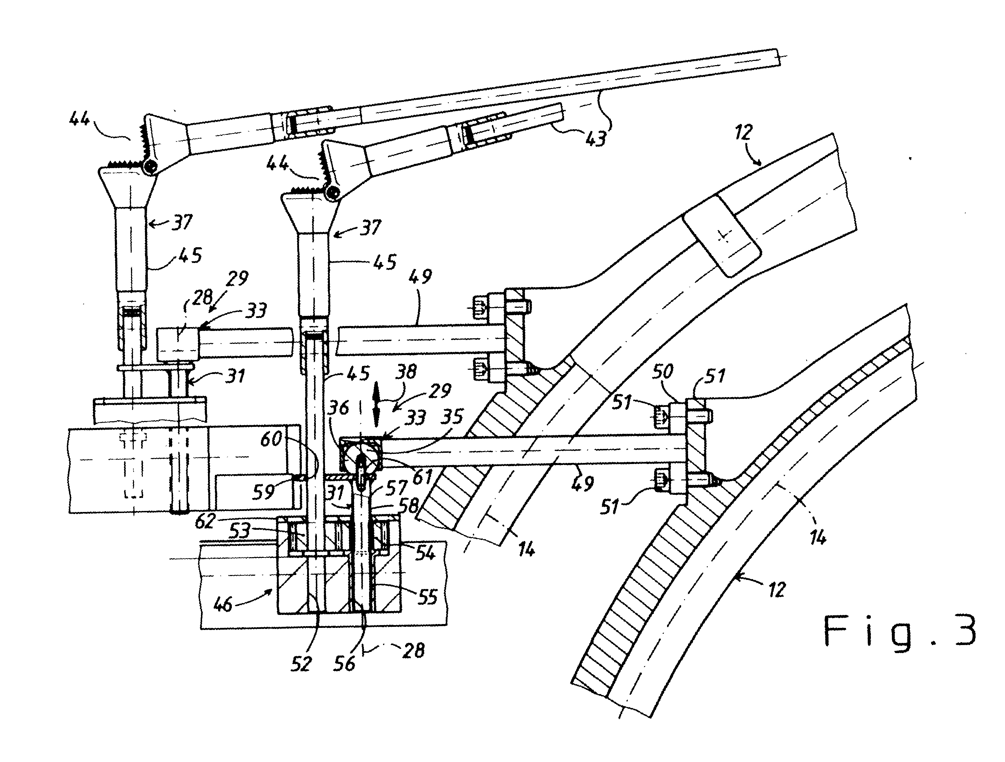

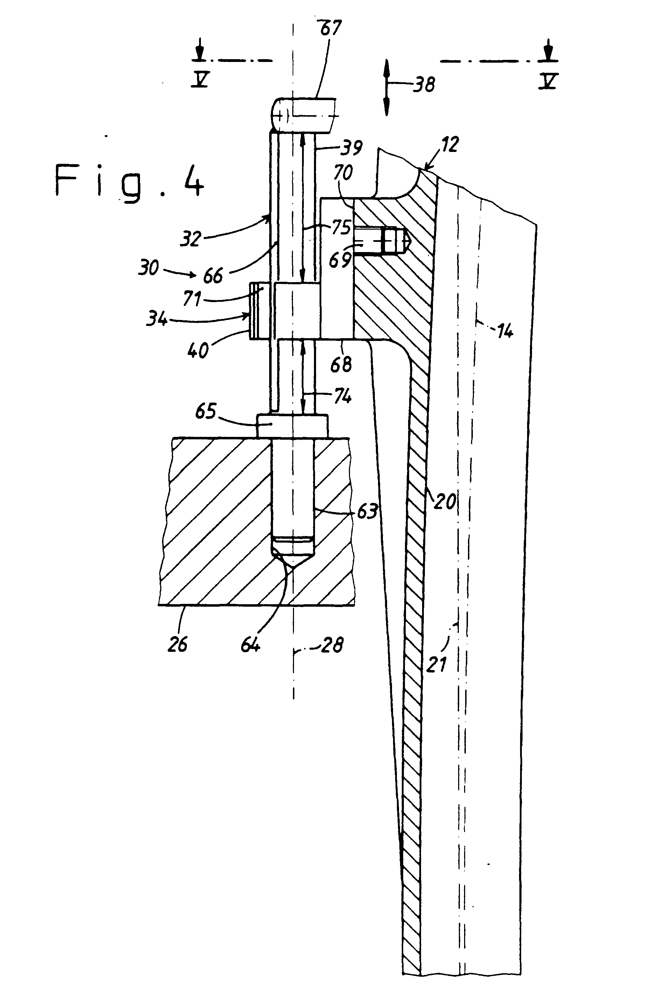

Das erste Lagerelement 31 weist einen Kugelkörper 35 (Fig. 3) auf, und das zugehörige zweite Lagerelement 33 ist mit einer den Kugelkörper 35 von oben übergreifenden Ausnehmung 36 in Form einer Topfsenkung (Fig. 3) versehen. Der Kugelkörper 35 ist durch einen Antrieb 37 in den Richtungen eines Doppelpfeils 38 parallel zu der senkrechten Stellachse 28 heb- oder senkbar. Das weitere erste Lagerelement 32 des Lagerbereichs 30 weist einen zu der Stellachse 28 koaxialen Lagerbolzen 39 (Fig. 4) auf. Relativ zu dem Lagerbolzen 39 ist ein Lagerauge 40 (Fig. 4) bewegbar.

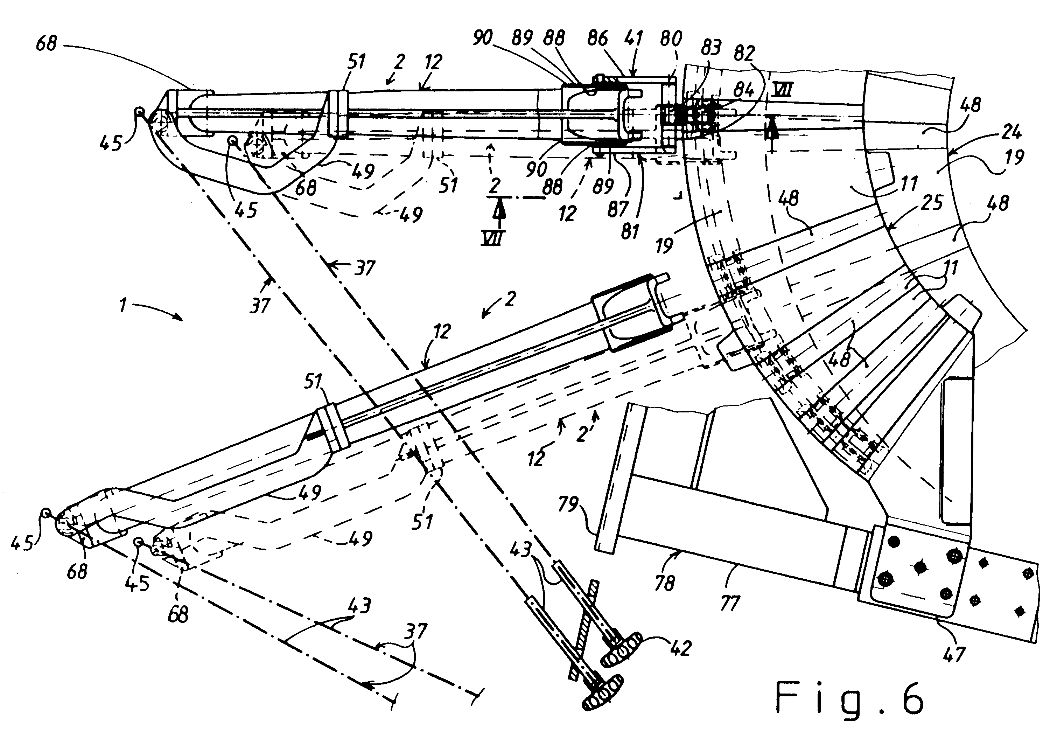

Das obere Ende 18 jeder Endrinne 12 ist durch eine Ausrichtvorrichtung 41 auf die über den Gleitkörper 11 ankommenden Tropfen 3 ausgerichtet. Einzelheiten der Ausrichtvorrichtung 41 werden im Zusammenhang mit den Fig. 6 bis 8 beschrieben werden.

Jeder Antrieb 37 zur Höheneinstellung der zugehörigen Endrinne 12 läßt sich von einer begehbaren, in Fig. 1 nicht dargestellten Zwischenbühne aus betätigen. Dazu wird ein Handrad 42 gedreht, das über eine Welle 43, ein Winkelgetriebe 44 und eine weitere Welle 45 auf ein Höhenstellgetriebe 46 einwirkt, dessen Einzelheiten im Zusammenhang mit Fig. 3 beschrieben werden. Alternativ ist eine Betätigung der Antriebe 37 auch vom Hüttenflur aus möglich.

In allen Zeichnungsfiguren sind gleiche Teile mit gleichen Bezugszahlen versehen.

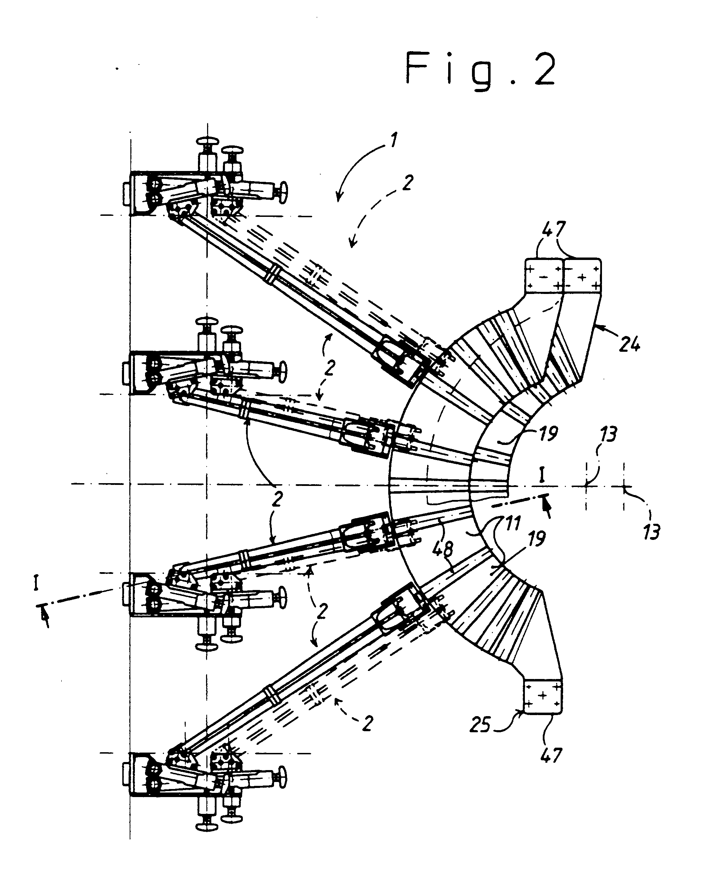

Gemäß Fig. 2 weist die Rinneneinrichtung 1 für eine nicht weiter dargestellte 10 Sektionen-I.S.-Glasformmaschine für die mittennahen vier Sektionen jeweils zwei übereinander angeordnete Rinnensysteme 2 entsprechend Fig. 1 auf. Die jeweils drei äußeren Sektionen zu beiden Seiten der in Fig. 2 gezeichneten Rinnensysteme 2 werden durch Rinnensysteme entsprechend der eingangs erwähnten WO 92/20631 A1 mit Tropfen versorgt, wobei jeweils zwischen der Gleiteinheit 24, 25 und der zugehörigen Endrinne eine in Fig. 2 nicht dargestellte Langrinne Verwendung findet. Von einer solchen Langrinne ist bewußt in den in Fig. 2 dargestellten mittennahen vier Sektionen der I.S.-Glasformmaschine kein Gebrauch gemacht.

Jede Gleiteinheit 24, 25 weist an ihren seitlichen Enden Montagestücke 47 auf. In der oberen Gleitfläche 19 jedes Gleitkörpers 11 befindet sich eine Gleitmulde 48, in der der Tropfen 3 über den jeweiligen Gleitkörper 11 hinweggleitet. Durch diese Gleitmulden 48 wird die Führung des Tropfens 3 und seine Einspeisung in die zugehörige Endrinne 12 verbessert.

Fig. 3 zeigt Einzelheiten des Lagerbereichs 29 und des Antriebs 37.

Die Ausnehmung 36 ist Bestandteil eines Arms 49, der über eine Montageplatte 50 mit Schrauben 51 an einer Aufnahmeplatte 51 der Endrinne 12 befestigt ist.

Die Welle 45 ist zweiteilig ausgeführt und ist mit ihrem unteren Ende in einer Lagerbohrung 52 des Höhenstellgetriebes 46 drehbar gelagert. Mit der Welle ist ein Zahnrad 53 fest verbunden, das mit einem Zahnrad 54 kämmt. Das Zahnrad 54 ist auf einer Buchse 55 befestigt, die unten in einer Lagerbohrung 56 des Höhenstellgetriebes 46 drehbar gelagert ist. Die Buchse 55 ist mit einem Innengewinde versehen, das im Eingriff mit einem Außengewinde 57 eines Schaftes 58 steht. Der Schaft 58 ist koaxial mit der senkrechten Stellachse 28 angeordnet und wird an einer Drehung um seine Längsachse durch eine Lünette 59 gehindert, die mit einer Bohrung 60 die Welle 45 umgreift und mit dem oberen Ende des Schaftes 58 verlötet ist. Durch eine Bohrung in der Lünette 59 erstreckt sich koaxial mit der senkrechten Stellachse 28 ein Gewindestift 61 in eine obere Gewindebohrung des Schaftes 58. Der Gewindestift 61 ist in seiner so eingeschraubten Stellung, z.B. durch Verklebung im Gewindebereich, gesichert. Der Kugelkörper 35 ist mit einem Innengewinde auf das obere Ende des Gewindestifts 61 in Berührung mit der Lünette 59 geschraubt und bei Bedarf in dieser Position ebenfalls durch Verklebung im Gewinde gesichert.

Eine Drehung der Welle 45 hat eine entsprechende Drehung des Schaftes 58 zur Folge, wobei sich außerdem der Kugelkörper 35 entsprechend der Steigung des Außengewindes 57 in den Richtungen des Doppelpfeils 38 hebt oder senkt. Das Höhenstellgetriebe 46 ist oben mit einem aufgeschraubten Deckel 62 abgedeckt.

Fig. 4 zeigt Einzelheiten des Lagerbereichs 30 in vergrößerter Darstellung. Der Lagerbolzen 39 greift unten mit einem Lagerzapfen 63 in eine Lagerbohrung 64 der ersten Stelleinrichtung 26. Der Lagerbolzen 39 ist um seine mit der senkrechten Stellachse 28 koaxiale Längsachse schwenkbar, wobei ein auf der ersten Stelleinrichtung 26 aufliegender Bund 65 die Höhenposition des Lagerbolzens 39 festlegt. Der Lagerbolzen 39 ist als einseitig eine Abflachung 66 aufweisender Kreiszylinder ausgebildet, an den oben quer ein Handgriff 67 angeschweißt ist.

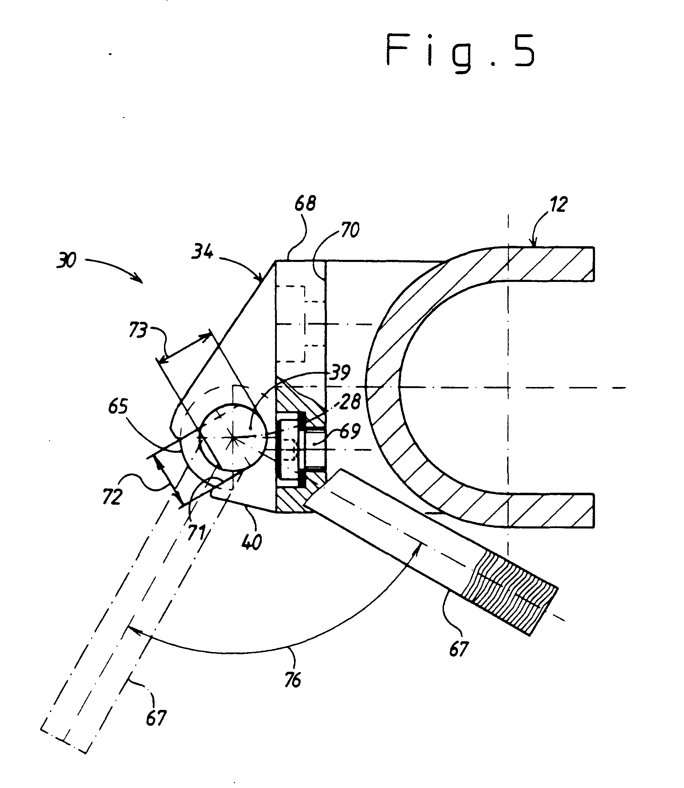

Das Lagerauge 40 des zweiten Lagerelements 34 ist mit einem Sockel 68 versehen und durch Schrauben 69 an einer Montagefläche 70 der Endrinne 12 befestigt. Das Lagerauge 40 weist eine seitliche Durchbrechung 71 auf, deren lichte Weite 72 (Fig. 5) gleich oder etwas größer als eine kleinste Querdimension 73 (Fig. 5) des Lagerbolzens 39 ist.

Durch den Antrieb 37 (Fig. 3) läßt sich die Endrinne 12 in den Richtungen des Doppelpfeils 38 parallel zu der senkrechten Stellachse 28 heben oder senken. In Fig. 4 steht bei der gezeichneten, zufälligen relativen Position von Lagerauge 40 und Lagerbolzen 39 für das Senken ein maximaler Weg 74 und für das Heben ein maximaler Weg 75 zur Verfügung. Diese Wege 74, 75 sind in der Summe so bemessen, daß eine Höhenanpassung der Endrinne 12 an jeden in der Praxis vorkommenden Durchmesser der Tropfen 3 möglich ist.

Fig. 5 verdeutlicht die Ausbildung der Einzelteile des Lagerbereichs 30. Ein Teil des Handgriffs 67 ist in Fig. 5 in der den Lagerbereich 30 verriegelnden Stellung mit vollausgezogenen Linien eingezeichnet. Der Handgriff 67 läßt sich um einen Winkel 76 bis in eine Stellung schwenken, die in Fig. 5 strichpunktiert eingetragen ist und den Lagerbereich 30 entriegelt. Der Winkel 76 beträgt ungefähr 90°. Nur in der in Fig. 5 strichpunktiert eingetragenen Stellung des Handgriffs 67 läßt sich das Lagerauge 40 von dem Lagerbolzen 39 lösen, wie später noch beschrieben wird.

Fig. 6 zeigt die Rinnensysteme 2 der unteren Hälfte der Fig. 2 in vergrößerter Darstellung.

Die Gleiteinheiten 24, 25 sind mit ihren Montagestücken 47 jeweils mit einem Schenkel 77 einer in der Draufsicht U-förmigen Haltevorrichtung 78 verschraubt. Die Haltevorrichtung 78 ist an ihrer in Fig. 6 linken Grundfläche 79 an einem in Fig. 6 nicht gezeichneten, stationären Scoopbalken befestigt.

In Fig. 6 ist zur besseren Übersicht der zeichnerischen Darstellung nur für das oberste Rinnensystem 2 die zugehörige Ausrichtvorrichtung 41 dargestellt. Gleiche Ausrichtvorrichtungen 41 finden bei den übrigen Rinnensystemen 2 Verwendung.

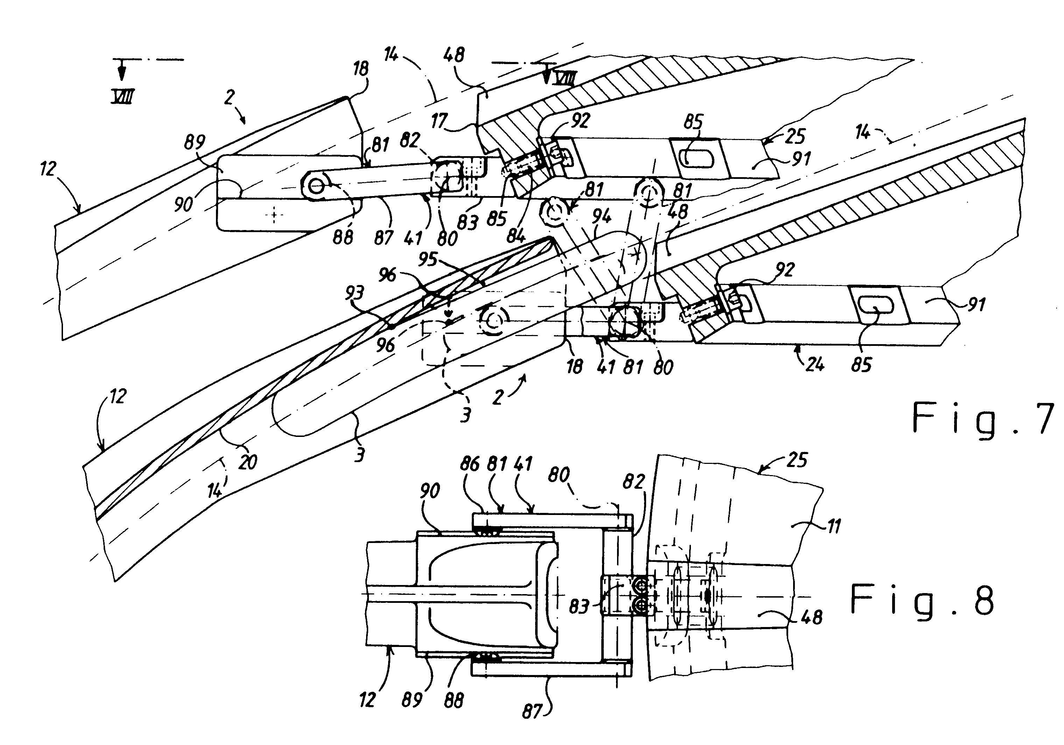

Jede Ausrichtvorrichtung 41 weist eine um eine maschinenfeste Achse 80 heb- und senkbare Gabel 81 auf. Eine Welle 82 der Gabel 81 ist in einem Lagerbock 83 drehbar gelagert. Der Lagerbock 83 ist mit einem Zapfen in einem sich in Umfangsrichtung der zugehörigen Gleiteinheit 24, 25 erstreckenden Langloch 85 (Fig. 7) festgelegt. An den Enden der Welle 82 ist jeweils ein Schenkel 86 und 87 der Gabel 81 befestigt. Die freien Enden der Schenkel 86, 87 tragen jeweils einen schraubenartigen Gleitkörper 88, der in Gleitberührung mit seitlichen Gleitflächen 89 des oberen Endes 18 der Endrinne 12 steht. Unten an jeder Gleitfläche 89 ist eine im wesentlichen waagerechte Stufe 90 vorgesehen, auf der sich die Gleitkörper 88 abstützen. So wird ein Durchfallen der Gabel 81 nach unten hin vermieden.

Zur Verdeutlichung der Darstellung ist in Fig. 6 das jeweils untere Rinnensystem 2 gestrichelt dargestellt.

Die Draufsicht der Fig. 6 verdeutlicht, daß die Arme 49 von Sektion zu Sektion der I.S.-Glasformmaschine unterschiedlich gekröpft ausgeführt sind. Diese Kröpfung hat den Zweck, Kollisionen der Arme 49 mit Teilen der Antriebe 37 während der Einstellvorgänge zu verhindern.

Fig. 7 zeigt weitere Einzelheiten der Ausrichtvorrichtung 41.

Die Langlöcher 85 sind in einer unteren Schürze 91 der Gleiteinheiten 24, 25 vorgesehen und schräg nach oben geneigt. Jeder Zapfen 84 ist mit einem Innengewinde versehen, in das von rechts in Fig. 7 jeweils eine die Schürze 91 hintergreifende Schraube 92 eingeschraubt ist. Vor dem Festziehen der Schraube 92 wird der Zapfen 84 in dem Langloch 85 derart seitlich verschoben, daß sich eine optimale Fluchtung der zugehörigen Gleitmulde 48 mit der Endrinne 12 ergibt. Dazu ist die Gabel 81 in ihre in Fig. 7 voll ausgezogen dargestellte Betriebsstellung gesenkt, in der die Gleitkörper 88 auf den Stufen 90 und in Berührung mit den Gleitflächen liegen. In diesem Zustand wird die Schraube 92 angezogen und das so justierte System fixiert.

Bei dem in Fig. 7 unteren Rinnensystem 2 ist das dargestellte Teilstück der Endrinne 12 im Längsschnitt dargestellt. Der mit vollausgezogenen Linien gezeichnete Tropfen 3 ist der Tropfen mit den maximalen Abmessungen. Dieser Tropfen hat auf seinem Weg entlang der Bewegungsbahn 14 in einem Punkt 93 erste Berührung mit der Gleitfläche 20 gemacht. In diesem Augenblick hat sich schon etwas mehr als die Hälfte der Länge des Tropfens 3 in der Endrinne 12 befunden. Eine der Gleitfläche 20 gegenüberliegende Außenfläche 94 des Tropfens 3 bildet am oberen Ende 18 der Endrinne 12 bis zu dem Punkt 93 einen Keilspalt 95. Der Punkt 93 wird bewußt so weit vom oberen Ende 18 der Endrinne 12 angeordnet, daß der Tropfen 3 in jedem Fall zu einem erheblichen Teil seiner Länge schon in die Endrinne 12 eingetaucht ist, bevor er mit der Gleitfläche 20 erste Berührung macht. Bei dieser Berührung wird der Tropfen 3 abgebremst. Insbesondere bei verhältnismäßig langen Tropfen 3 könnte anderenfalls die Tendenz bestehen, daß sich das hintere Ende des Tropfens 3 aufstellt und im Extremfall um das obere Ende 18 der Endrinne 12 biegt. Dies würde unerwünschte Formänderungen des Tropfens 3 zur Folge haben. Gleiches gilt, wenn der Tropfen 3 nicht auf den Punkt 93 oder einen anderen Punkt der Gleitfläche 20, sondern vielmehr stumpf auf das obere Ende 18 der Endrinne 12 auftreffen würde. In diesem Fall bestünde kein Keilspalt 95 und wäre ständig mit der Gefahr zu rechnen, daß der Tropfen stark deformiert oder das Rinnensystem 2 gar blockiert würde.

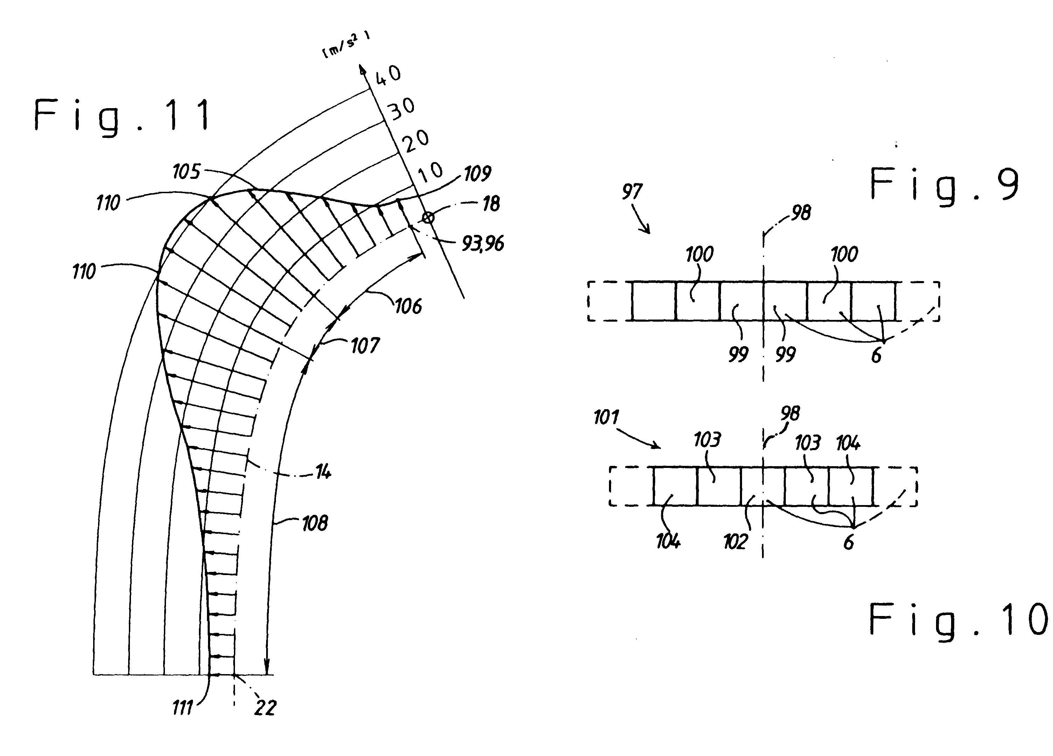

In dem unteren Rinnensystem 2 der Fig. 7 ist außerdem gestrichelt der Tropfen 3 mit den minimalen Abmessungen eingezeichnet. Würde man bei der Umstellung von dem maximalen auf den minimalen Tropfen die Höhenstellung der Endrinne 12 so belassen, wie dies in Fig. 7 eingezeichnet ist, würde der minimale Tropfen 3 bei dann niedriger liegender Bewegungsbahn 14 verhältnismäßig sehr weit in die Endrinne 12 hineinfliegen, bevor er deutlich unterhalb des Punktes 93 erste Berührung mit der Gleitfläche 20 machen würde. Dies wäre unerwünscht, wie nachfolgend noch im Zusammenhang mit Fig. 9 dargestellt wird.

Folglich wird beim Übergang auf den minimalen Tropfen 3 oder auf irgendeinen anderen Tropfen 3, der kleiner als der maximale Tropfen 3 ist, die Endrinne 12 abgesenkt, bis ein gewünschter Punkt 96 der ersten Berührung des minimalen Tropfens 3 mit der Gleitfläche 20 an der in Fig. 7 ebenfalls eingetragenen erforderlichen tieferen Stelle angeordnet ist. Der gestrichelte minimale Tropfen 3 ist in Fig. 7 genau in dem Augenblick eingezeichnet, in dem er erste Berührung mit dem Punkt 96 macht. In diesem Zustand befindet sich der minimale Tropfen 3 zu mehr als der Hälfte seiner Länge bereits in der Endrinne 12.

Durch die Berührung mit der Gleitfläche 20 wird der Tropfen 3 mehr oder minder abgeflacht, wie dies für den maximalen Tropfen 3 in Fig. 7 im vorderen Bereich zu erkennen ist.

Fig. 8 zeigt Einzelheiten der Ausrichtvorrichtung 41 gemäß Fig. 6 in vergrößerter Darstellung.

Von Zeit zu Zeit werden die Endrinnen 12 gewechselt. Dabei geht man wie folgt vor:

Die Gabel 81 der zugehörigen Ausrichtvorrichtung 41 wird außer Berührung mit der Endrinne in die in Fig. 7 strichpunktiert eingezeichnete Stellung hochgeschwenkt und an der Gleiteinheit 24 oder 25 abgelegt. Bei der oberen Endrinne 12 der beiden Endrinnen 12 jeder Sektion kann dann der Handgriff 67 aus der in Fig. 5 vollausgezogenen Sicherungsstellung in die strichpunktierte Freigabestellung geschwenkt werden. Sodann wird die Endrinne 12 insgesamt so weit angehoben, daß sich die Ausnehmung 36 (Fig. 3) von dem Kugelkörper 35 vollständig löst. Schließlich wird die Endrinne 12 seitwärts bewegt, bis der Lagerbolzen 39 mit seiner kleinsten Querdimension 73 die seitliche Durchbrechung 71 des Lagerauges 40 verlassen hat. In diesem Augenblick ist die Endrinne 12 frei und kann auf umgekehrtem Weg durch eine neue Endrinne 12 ersetzt werden.

Bei dem Austausch der in Fig. 7 unteren Endrinne 12 muß zur Vermeidung einer Kollision mit darüber angeordneten Vorrichtungsteilen in anderer Weise vorgegangen werden. Auch hier wird, wie in Fig. 7 strichpunktiert angedeutet, zunächst die Gabel 81 hochgeschwenkt und an der Gleiteinheit 24 abgelegt. Sodann wird in Abweichung von der zuvor beschriebenen Vorgehensweise die untere Endrinne 12 um die senkrechte Stellachse 28 geschwenkt, bis sie bei dem nachfolgenden Ausheben nicht mehr mit darüber befindlichen Vorrichtungsteilen kollidieren kann. Dann wird in der zuvor beschriebenen Weise mit dem Öffnen des Handgriffs 67 fortgefahren.

Fig. 9 zeigt eine I.S.-Glasformmaschine 97 mit gerader Gesamtanzahl der Sektionen 6. Zu beiden Seiten einer Mittenquerebene 98 ist je eine zentrale Sektion 99 angeordnet, an die sich jeweils außen eine Anschlußsektion 100 anschließt. Die I.S.-Glasformmaschine 97 kann nur aus den beiden zentralen Sektionen 99, 99 oder zusätzlich aus den beiden Anschlußsektionen 100, 100 oder zusätzlich aus noch weiter außen liegenden Sektionen 6 bestehen. Es können entweder sämtliche Sektionen der I.S.-Glasformmaschine 97 oder nur diejenigen Sektionen in der erfindungsgemäßen Weise ausgestattet sein, die sich in der Nähe der Mittenquerebene 98 befinden.

Fig. 10 zeigt eine I.S.-Glasformmaschine 101 mit ungerader Gesamtanzahl der Sektionen 6. Eine zentrale Sektion 102 ist in der Mittenquerebene 98 angeordnet. Zu beiden Seiten der zentralen Sektion 102 befindet sich eine Nachbarsektion 103, an die sich jeweils außen eine Anschlußsektion 104 anschließt. Auch die I.S.-Glasformmaschine 101 kann nur aus den Sektionen 102, 103 oder aus den Sektionen 102 bis 104 oder auch aus weiteren Sektionen 6 bestehen, die in Fig. 10 gestrichelt angedeutet sind.

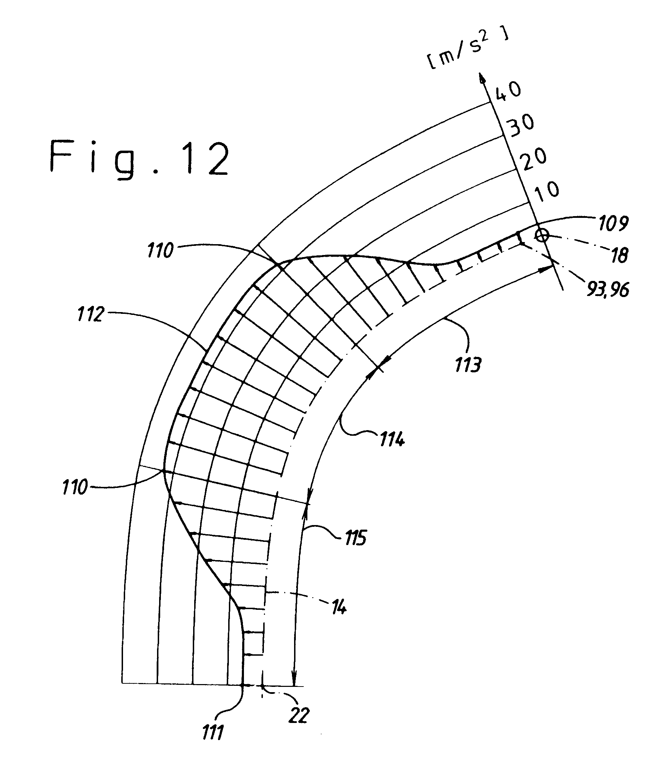

In den Fig. 11 und 12 ist jeweils ein Diagramm eines typischen Verlaufs der auf den Tropfen 3 in der Endrinne 12 einwirkenden Normalbeschleunigung dargestellt. Auf der Ordinate des zugehörigen Koordinatensystems ist jeweils die Normalbeschleunigung aufgetragen, während die Abszisse durch die Bewegungsbahn 14 des Schwerpunkts des Tropfens 3 in der Endrinne 12 gebildet wird.

Ein Verlauf der Normalbeschleunigung gemäß Fig. 11 findet Verwendung entweder bei den zentralen Sektionen 99 gemäß Fig. 9 oder bei der zentralen Sektion 102 und den Nachbarsektionen 103, 103 gemäß Fig. 10. Eine Kurve 105 der Normalbeschleunigung läßt sich in einen ersten Abschnitt 106, einen zweiten Abschnitt 107 und einen dritten Abschnitt 108 unterteilen. Der erste Abschnitt 106 beginnt vorzugsweise nicht schon am oberen Ende 18 der zugehörigen Endrinne 12, sondern ein Stück innerhalb der Endrinne 12 in einem Punkt 93 oder 96 der Berührungszone, in welcher der Tropfen 3 zuerst in Berührung mit der Endrinne 12 tritt. In diesem Punkt 93 oder 96 wirkt ein Anfangswert 109 der Normalbeschleunigung. Die Normalbeschleunigung nimmt dann in dem ersten Abschnitt 106 auf einen 0berwert 110 zu. In dem zweiten Abschnitt 107 erhöht sich die Normalbeschleunigung nur noch geringfügig über den Oberwert 110 hinaus und fällt zum Ende des zweiten Abschnitts wieder auf den 0berwert 110 ab. In dem dritten Abschnitt 108 nimmt schließlich die Normalbeschleunigung von dem 0berwert 110 auf einen Endwert 111 am unteren Ende 22 der Endrinne 12 ab.

Eine Kurve 112 der Normalbeschleunigung gemäß Fig. 12 zeigt einen von der Kurve 105 in Fig. 11 abweichenden Verlauf. Auch zu der Kurve 112 sind ein erster Abschnitt 113, ein zweiter Abschnitt 114 und ein dritter Abschnitt 115 eingezeichnet. In Fig. 12 wird der 0berwert 110 der Normalbeschleunigung etwas später erreicht als in Fig. 11 und mit geringfügigem weiteren Anstieg länger aufrechterhalten als in Fig. 11. Dadurch kann der 0berwert 110 der Normalbeschleunigung geringer gehalten werden als in Fig. 11.

Das Profil der Bewegungsbahn 14 des Schwerpunkts des Tropfens 3 in der Endrinne 12 wird mit den erfindungsgemäßen Merkmalen von Fall zu Fall optimal gestaltet. Vorgegeben wird dazu eine Begrenzung des Rucks und außerdem eine Begrenzung der Maximalbeschleunigung. In jedem Fall wird ein Eintrittsbereich für den Tropfen 3 in die Endrinne 12 zur Verfügung gestellt, der nur gering gegenüber der entsprechenden Wurfparabel des Tropfens 3 geneigt ist und dadurch niedrige, aber definierte Andruckkräfte des Tropfens 3 an die Endrinne 12 liefert. Der Eintrittsbereich wird außerdem lang genug gewählt, um alle Tropfenlängen aufzunehmen, bevor die energische Umlenkung des Tropfens 3 im zweiten Abschnitt 107, 114 geschieht. Schließlich wird ein Austrittsbereich der Endrinne 12 zur Verfügung gestellt, in dem die Normalbeschleunigung kontrolliert auf einen Wert zurückgefahren wird, der einen sauberen, dreh- und driftfreien Austritt des Tropfens 3 aus der Endrinne 12 gewährleistet.

## Patentansprüche

1. Rinneneinrichtung (1) zur Leitung von Tropfen (3) schmelzflüssigen Glases von einem Tropfenspeiser (4) jeweils durch ein Rinnensystem (2) in wenigstens eine Form (5) einer von mehreren Sektionen (6) einer I.S.-Glasformmaschine (97;101),
wobei jedes Rinnensystem (2) eine Scooprinne (10), einen im wesentlichen plattenförmigen Gleitkörper (11) und eine Endrinne (12) aufweist,
wobei die Scooprinne (10) gekrümmt ist und den vom Tropfenspeiser (4) kommenden Tropfen (3) auffängt und schräg nach unten umlenkt,
wobei jeder Gleitkörper (11) maschinenfest abgestützt ist und eine schräg nach unten geneigte obere Gleitfläche (19) für die Tropfen (3) aufweist,
und wobei die Endrinne (12) gekrümmt ist, den ankommenden Tropfen (3) nach unten hin koaxial zu der Längsachse (21) der Form (5) umlenkt und durch eine erste Stelleinrichtung (26) in einer zu der Längsachse (21) der Form (5) rechtwinkligen Ebene einstellbar ist,
dadurch gekennzeichnet, daß in wenigstens einer Sektion (6) der I.S.-Glasformmaschine (97;101) in jedem Rinnensystem (2) ein oberes Ende (18) der Endrinne (12) die Tropfen (3) unmittelbar von einem unteren Ende (17) des Gleitkörpers (11) Übernimmt, daß jede Endrinne (12) durch eine zweite Stelleinrichtung (27) heb- oder senkbar ist, und daß jede Endrinne (12) um eine senkrechte Stellachse (28) schwenkbar ist.

2. Rinneneinrichtung nach Anspruch 1, dadurch gekennzeichnet, daß die I.S.-Glasformmaschine (97;101) eine Mittenquerebene (98) aufweist, und daß es sich bei der wenigstens einen Sektion (6) um eine, bezogen auf die Mittenquerebene (98), mittennahe Sektion (99,100; 102 bis 104) der I.S.-Glasformmaschine (97;101) handelt.

3. Rinneneinrichtung nach Anspruch 1 oder 2,
dadurch gekennzeichnet, daß alle einer bestimmten Scooprinne (10) zugeordneten Gleitkörper (11) miteinander zu einer Gleiteinheit (24;25) verbunden sind.

4. Rinneneinrichtung nach einem der Ansprüche 1 bis 3,
dadurch gekennzeichnet, daß jede zweite Stelleinrichtung (27) in der senkrechten Stellachse (28) auf einer konvexen Rückseite der zugehörigen Endrinne (12) hebend oder senkend auf die Endrinne (12) einwirkt.

5. Rinneneinrichtung nach einem der Ansprüche 1 bis 4,
dadurch gekennzeichnet, daß entlang der Stellachse (28) im Abstand voneinander Lagerbereiche (29,30) vorgesehen sind,
daß ein erstes Lagerelement (31,32) jedes Lagerbereichs (29,30) durch die erste Stelleinrichtung (26) getragen und in der Ebene einstellbar ist,
und daß ein zweites Lagerelement (33,34) jedes Lagerbereichs (29,30) an der Endrinne (12) befestigt ist.

6. Rinneneinrichtung nach Anspruch 5,
dadurch gekennzeichnet, daß eines (31) der ersten Lagerelemente (31,32) einen Kugelkörper (35) aufweist,
und daß das zugehörige zweite Lagerelement (33) mit einer den Kugelkörper (35) von oben übergreifenden Ausnehmung (36) versehen ist.

7. Rinneneinrichtung nach Anspruch 6,
dadurch gekennzeichnet, daß der Kugelkörper (35) durch einen Antrieb (37) heb- oder senkbar ist,
daß jedes weitere erste Lagerelement (32) einen zu der Stellachse (28) koaxialen Lagerbolzen (39) aufweist,
und daß relativ zu jedem Lagerbolzen (39) ein Lagerauge (40) des zugehörigen zweiten Lagerelements (34) bewegbar ist.

8. Rinneneinrichtung nach Anspruch 7,
dadurch gekennzeichnet, daß jeder Lagerbolzen (39) als einseitig eine Abflachung (66) aufweisender, um seine Längsachse (28) schwenkbarer Kreiszylinder ausgebildet ist,
und daß jedes Lagerauge (40) eine seitliche Durchbrechung (71) aufweist, deren lichte Weite (72) gleich oder etwas größer als eine kleinste Querdimension (73) des Lagerbolzens (39) ist.

9. Rinneneinrichtung nach einem der Ansprüche 1 bis 8,
gekennzeichnet durch eine das obere Ende (18) jeder Endrinne (12) auf die über den Gleitkörper (11) ankommenden Tropfen (3) ausrichtende Ausrichtvorrichtung (41).

10. Rinneneinrichtung nach Anspruch 9,
dadurch gekennzeichnet, daß jede Ausrichtvorrichtung (41) eine um eine maschinenfeste Achse (80) heb- oder senkbare Gabel (81) aufweist,
und daß Schenkel (86,87) der Gabel (81) jeweils in Gleitberührung mit gegenüberliegenden seitlichen Gleitflächen (89) des oberen Endes (18) der zugehörigen Endrinne (12) stehen.

11. Rinneneinrichtung nach Anspruch 10,
dadurch gekennzeichnet, daß nur freie Enden (88) der Schenkel (86,87) in Gleitberührung mit den Gleitflächen (89) stehen.

12. Rinneneinrichtung nach Anspruch 10 oder 11,
dadurch gekennzeichnet, daß die Gabel (81) in den Richtungen der maschinenfesten Achse (80) einstellbar ist.

13. Rinneneinrichtung nach einem der Ansprüche 9 bis 12,
dadurch gekennzeichnet, daß jede Ausrichtvorrichtung (41) an dem zugehörigen Gleitkörper (11) montiert ist.

14. Rinneneinrichtung nach einem der Ansprüche 1 bis 13,
dadurch gekennzeichnet, daß an einem oberen Ende (18) der Endrinne (12) innen ein sich zum oberen Ende (18) der Endrinne (12) erweiternder Keilspalt (95) zu der gegenüberliegenden Außenfläche (94) des Tropfens (3) besteht.

15. Rinneneinrichtung nach Anspruch 14,
dadurch gekennzeichnet, daß eine Berührungszone (93;96), in der der Tropfen (3) zuerst in Berührung mit der Endrinne (12) tritt, etwa um 1/2 bis 2/3 der Länge des Tropfens (3) hinter dem oberen Ende (18) der Endrinne (12) liegt.

16. Rinneneinrichtung nach einem der Ansprüche 1 bis 15,
dadurch gekennzeichnet, daß durch entsprechende Krümmung einer inneren Gleitfläche (20) der Endrinne (12) entlang einer Bewegungsbahn (14) der Längsachse des Tropfens (3) in der Endrinne (12) drei charakteristische, stufenlos aneinander anschließende Abschnitte (106 bis 108;113 bis 115) der auf den Tropfen (3) einwirkenden Normalbeschleunigung in der Bewegungsrichtung des Tropfens (3) vorgesehen sind,
wobei in dem ersten Abschnitt (106;113) die Normalbeschleunigung von einem Anfangswert (109) in einer Berührungszone (93;96), in der der Tropfen (3) zuerst in Berührung mit der Endrinne (12) tritt, auf einen Oberwert (110) zunimmt,
wobei in dem zweiten Abschnitt (107;114) die Normalbeschleunigung zumindest annähernd auf dem Oberwert (110) bleibt,
und wobei in dem dritten Abschnitt (108;115) die Normalbeschleunigung von dem Oberwert (110) auf einen Endwert (111) am unteren Ende (22) der Endrinne (12) abnimmt.

17. Rinneneinrichtung nach Anspruch 16,
dadurch gekennzeichnet, daß die I.S.-Glasformmaschine (97;101) eine Mittenquerebene (98) aufweist, und daß
a) bei gerader Gesamtanzahl der Sektionen (6) der I.S.-Glasformmaschine (97) in den beiden zentralen Sektionen (99,99) zu beiden Seiten der Mittenquerebene (98), oder
b) bei ungerader Gesamtanzahl der Sektionen (6) der I.S.-Glasformmaschine (101) in der zentralen Sektion (102) in der Mittenquerebene (98) und in den beiden Nachbarsektionen (103,103) zu beiden Seiten der zentralen Sektionen (102)
bei jeder Endrinne (12) die drei Abschnitte (106 bis 108) die folgenden relativen Längen, bezogen auf die zu 100 % angesetzte Gesamtlänge der Bewegungsbahn (14) der Längsachse des Tropfens (3) in Berührung mit der Endrinne (12), aufweisen:
Der erste Abschnitt (106) erstreckt sich von der Berührungszone (93;96) bis zu 23 bis 29 %, vorzugsweise bis zu 26 %,
das hintere Ende des zweiten Abschnitts (107) liegt bei 34 bis 40 %, vorzugsweise bei 37 %, und
der dritte Abschnitt (108) erstreckt sich über den jeweiligen Rest der Gesamtlänge.

18. Rinneneinrichtung nach Anspruch 17,
dadurch gekennzeichnet, daß
a) bei gerader Gesamtanzahl der Sektionen (6) der I.S.-Glasformmaschine (97) in der nach außen an jede der beiden zentralen Sektionen (99,99) anschließenden Anschlußsektion (100,100), oder
b) bei ungerader Gesamtzahl der Sektionen (6) der I.S.-Glasformmaschine (101) in der nach außen an jede der beiden Nachbarsektionen (103,103) anschließenden Anschlußsektion (104,104)
bei jeder Endrinne (12) die drei Abschnitte (113 bis 115) die folgenden relativen Längen, bezogen auf die zu 100 % angesetzte Gesamtlänge der Bewegungsbahn (14) der Längsachse des Tropfens (3) in Berührung mit der Endrinne (12), aufweisen:
Der erste Abschnitt (113) erstreckt sich von der Berührungszone (93;96) bis zu 32 bis 42 % vorzugsweise bis zu 37 %,
das hintere Ende des zweiten Abschnitts (114) liegt bei 62 bis 72 %, vorzugsweise bei 67 %, und
der dritte Abschnitt (115) erstreckt sich über den jeweiligen Rest der Gesamtlänge.

19. Rinneneinrichtung nach einem der Ansprüche 16 bis 18,
dadurch gekennzeichnet, daß der Anfangswert (109) der Normalbeschleunigung 9 bis 20 % des Oberwerts (110) der Normalbeschleunigung beträgt.

20. Rinneneinrichtung nach einem der Ansprüche 16 bis 19,
dadurch gekennzeichnet, daß der Endwert (111) der Normalbeschleunigung 15 bis 19 % des Oberwerts (110) der Normalbeschleunigung beträgt.

## Claims

1. Gob delivery apparatus (1) for the conducting of gobs (3) of molten glass from a gob feeder (4) respectively through a gob delivery system (2) into at least one mold (5) of one of several sections (6) of an I.S. glassware forming machine (97; 101),
wherein each gob delivery system (2) comprises a scoop (10), a substantially plate-like slide member (11) and a deflector (12),
wherein the scoop (10) is curved and catches the gobs (3) coming from the gob feeder (4) and directs them downwards at an angle,
wherein each slide member (11) is supported fixedly on the machine and includes a downwardly inclined upper slide surface (19) for the gobs (3),
and wherein the deflector (12) is curved, deflects the incoming gobs (3) downwards and coaxially with respect to the longitudinal axis (21) of the mold (5), and is adjustable by means of a first adjustment device (26) in a plane which is perpendicular to the longitudinal axis (21) of the mold (5),
characterized in that in at least one section (6) of the I.S. glassware forming machine (97; 101) in each gob delivery system (2) an upper end (18) of the deflector (12) receives the gobs (3) directly from a lower end (17) of the slide member (11), that each deflector (12) can be raised or lowered by a second adjustment device (27), and that each deflector is pivotable about a vertical adjustment axis.

2. Gob delivery apparatus according to claim 1, characterized in that the I.S. glassware forming machine (97; 101) has a central transverse plane (98), and that reference to said at least one section (6) includes, with reference to the central transverse plane (98), a section (99, 100; 102 to 104) of the I.S. glassware forming machine (9.7; 101) adjacent to the center.

3. Gob delivery system according to claim 1 or 2, characterized in that all slide members (11) associated with a given scoop (10) are connected together to a slide unit (24; 25).

4. Gob delivery apparatus according to claim 1, 2 or 3, characterized in that each second adjustment device (27) acts on the deflector (12) in the sense to raise or lower it along said vertical adjustment axis (28) at a convex rear side of the associated deflector (12).

5. Gob delivery apparatus according to one of claims 1 to 4, characterized in that spaced bearing regions (29, 30) are provided along the adjustment axis (28),
a first bearing element (31, 32) of each bearing region (29, 30) is carried by said first adjustment device (26) and is adjustable in the said plane,
and a second bearing element (33, 34) of each bearing region (29, 30) is fixed to the deflector (12).

6. Gob delivery apparatus according to claim 5, characterized in that one (31) of the first bearing elements (31, 32) includes a ball member (35), and the associated second bearing element (33) is provided with a recess (36) which engages over the ball member (35) from above.

7. Gob delivery apparatus according to claim 6, characterized in that the ball member (35) can be raised or lowered by a drive (37),
each further first bearing element (32) includes a bearing bolt (39) coaxial with respect to the adjustment axis (28),
and a bearing eye (40) of the associated second bearing element (34) is movable relative to each bearing bolt (39).

8. Gob delivery apparatus according to claim 7, characterized in that each bearing bolt (39) is formed as a circular cylinder having a flat surface (66) on one side and pivotable about its longitudinal axis (28),
and each bearing eye (40) has a lateral aperture (71) whose clear width (72) is equal to or somewhat larger than the smallest transverse dimension (73) of the bearing bolt (39).

9. Gob delivery apparatus according to one of claims 1 to 8, characterized by an alignment device (41) aligning the upper end (18) of each deflector (12) with the gobs (3) arriving by way of the slide member (11).

10. Gob delivery apparatus according to claim 9, characterized in that each alignment device (41) includes a fork (81) which can be raised or lowered about an axis (80) which is fixed relative to the machine,
and limbs (86, 87) of the fork (81) are each in sliding contact with opposed, lateral slide surfaces (89) of the upper end (18) of the associated deflector (12).

11. Gob delivery apparatus according to claim 10, characterized in that only free ends (88) of the limbs (86, 87) are in sliding contact with the slide surfaces (89).

12. Gob delivery apparatus according to claim 10 or 11,
characterized in that the fork (81) is adjustable in the directions of said axis (80) which is fixed relative to the machine.

13. Gob delivery apparatus according to one of claims 9 to 12, characterized in that each alignment device (41) is mounted on the associated slide member (11).

14. Gob delivery apparatus according to one of claims 1 to 13, characterized in that at an upper end (18) of the deflector (12) there is an internal wedge-shaped gap (95) in relation to the opposing external surface (94) of the gob (3), with said gap widening towards the upper end (18) of the deflector (12).

15. Gob delivery apparatus according to claim 14,
characterized in that a contact zone (93; 96), in which the gobs (3) first come into contact with the deflector (12), lies at about half to two-thirds of the length of the gob (3) after the upper end (18) of the deflector (12).

16. Gob delivery apparatus according to one of claims 1 to 15, characterized in that by appropriate curvature of an inner slide surface (20) of the deflector (12) along a path of movement (14) of the longitudinal axis of the gob (3) in the deflector (12) three characteristic, steplessly connected zones (106 to 108; 113 to 115) of the acceleration acting on the gobs (3) normally to the direction of movement of the gobs (3) are provided,
wherein in the first section (106; 113) the normal acceleration increases from an initial value (109), in a contact zone (93; 96) in which the gob (3) first comes into contact with the deflector (12), to an upper value (110),
wherein in the second section (107; 114) the normal acceleration remains at least approximately at the upper value (110),
and wherein in the third section (108; 115) the normal acceleration decreases from the upper value (110) to an end value (111) at the lower end (22) of the deflector (12).

17. Gob delivery apparatus according to claim 16, characterized in that the I.S. glassware forming machine (97; 101) has a central transverse plane (98),
and that
a) for an even total number of the sections (6) of the I.S. glassware forming machine (97), in the two central sections (99, 99) to each side of the central transverse plane (98), or
b) for an odd total number of the sections (6) of the I.S. glassware forming machine (101), in the central section (102) in the central transverse plane (98) and in the two neighbouring sections (103, 103) on each side of the central section (102), for each deflector (12) the three sections (106 to 108) have the following relative lengths, taking the total length of the path of movement (14) of the longitudinal axis of the gobs (3) in contact with the deflector (12) as 100%:
The first section (106) extends from the contact zone (93; 96) up to 23 to 29%, preferably up to 26%,
the rear end of the second section (107) lies at 34 to 40%, preferably at 37%, and
the third section (108) extends over the rest of the total length.

18. Gob delivery apparatus according to claim 17,
characterized in that
a) for an even total number of the sections (6) of the I.S. glassware forming machine (97) in which flank sections (100, 100) are provided outwardly on each side of the two central sections (99, 99) or
b) for an odd total number of the sections (6) of the I.S. glassware forming machine (101) in which flank sections (104, 104) are provided outwardly of each of the two neighbouring sections (103, 103) for each deflector (12) the three sections (113 to 115) have the following relative lengths, taking the total length of the path of movement (14) of the longitudinal axis of the gobs (3) in contact with the deflector (12) as 100%:
The first section (113) extends from the contact zone (93; 96) up to 32 to 42%, preferably up to 37%,
the rear end of the second section (114) lies at 62 to 72%, preferably at 67%, and
the third section (115) extends over the rest of the total length.

19. Gob delivery apparatus according to one of claims 16 to 18, characterized in that the initial value (109) of the normal acceleration amounts to 9 to 20% of the upper value (110) of the normal acceleration.

20. Gob delivery apparatus according to one of claims 16 to 19, characterized in that the end value (111) of the normal acceleration amounts to 15 to 19% of the upper value (110) of the normal acceleration.

## Revendications

1. Structure de conduits (1) destinée à acheminer des paraisons (3) de verre fondu à partir d'une réserve de paraisons (4), par un système de conduits (2), vers au moins un moule (5) dans une ou plusieurs sections (6) d'une machine à mouler le verre à sections individuelles (97 ; 101),
dans laquelle chaque système de conduits (2) présente un conduit formant cuiller (10), une glissière (11) sensiblement en forme de plaque et un conduit terminal (12),
dans laquelle le conduit formant cuiller (10) est courbe et reçoit la paraison (3) arrivant de la réserve de paraisons (4) pour la dévier en oblique vers le bas,
dans laquelle chaque glissière (11) est soutenue de manière solidaire de la machine et présente une surface de glissement supérieure (19) orientée en oblique vers le bas pour les paraisons (3),
et dans laquelle le conduit terminal (12) est courbe, dévie la paraison (3) qui arrive vers le bas de façon coaxiale par rapport à l'axe longitudinal (21) du moule (5) et peut être réglé par un premier dispositif de positionnement (26) dans un plan perpendiculaire à l'axe longitudinal (21) du moule (5),
caractérisée en ce que dans au moins une section (6) de la machine à mouler le verre à sections individuelles (97 ; 101), dans chaque système de conduits (2), une extrémité supérieure (18) du conduit terminal (12) reçoit directement les paraisons (3) d'une extrémité inférieure (17) de la glissière (11),
en ce que chaque conduit terminal (12) peut être levé ou abaissé par un deuxième dispositif de positionnement (27),
et en ce que chaque conduit terminal (12) peut pivoter autour d'un axe de positionnement (28) vertical.

2. Structure de conduits selon la revendication 1, caractérisée en ce que la machine à mouler le verre à sections individuelles (97 ; 101) présente un plan transversal médian (98) et en ce qu'au moins une section (6) est une section (99, 100 ; 102 à 104) proche du milieu de la machine à mouler le verre à sections individuelles (97 ; 101) par rapport au plan transversal médian (98).

3. Structure de conduits selon la revendication 1 ou 2, caractérisée en ce que toutes les glissières (11) correspondant à un conduit formant cuiller (10) donné sont reliées les unes aux autres pour former une unité de glissière (24 ; 25).

4. Structure de conduits selon l'une ou l'ensemble des revendications 1 à 3, caractérisée en ce que chaque deuxième dispositif de positionnement (27) agit dans l'axe de positionnement vertical (28) sur une face arrière convexe du conduit terminal (12) correspondant pour lever ou abaisser celui-ci.

5. Structure de conduits selon l'une ou l'ensemble des revendications 1 à 4, caractérisée en ce que des zones de support (29, 30) espacées l'une de l'autre sont prévues le long de l'axe de positionnement (28),
en ce qu'un premier élément de support (31, 32) de chaque zone de support (29, 30) est supporté et peut être ajusté dans le plan par le premier dispositif de positionnement (26),
et en ce qu'un deuxième élément de support (33, 34) de chaque zone de support (29, 30) est fixé au conduit terminal (12).

6. Structure de conduits selon la revendication 5, caractérisée en ce que l'un (31) des premiers éléments de support (31, 32) présente un corps sphérique (35),
et en ce que le deuxième élément de support (33) correspondant est pourvu d'un évidement (36) entourant le corps sphérique (35) par dessus.

7. Structure de conduits selon la revendication 6, caractérisée en ce que le corps sphérique (35) peut être levé ou abaissé par un entraînement (37),
en ce que chaque autre premier élément de support (32) présente un goujon de support (39) coaxial par rapport à l'axe de positionnement (28),
et en ce qu'un oeillet de support (40) du deuxième élément de support correspondant (34) peut être déplacé par rapport à chaque goujon de support (39).

8. Structure de conduits selon la revendication 7, caractérisée en ce que chaque goujon de support (39) est conçu comme un cylindre présentant une zone aplatie (66) sur un côté et pivotant autour de son axe longitudinal (28),
et en ce que chaque oeillet de support (40) présente une ouverture latérale (71) dont la largeur (72) est égale ou légèrement supérieure à la plus petite dimension transversale (73) du goujon de support (39).

9. Structure de conduits selon l'une ou l'ensemble des revendications 1 à 8, caractérisée en ce qu'elle comporte un dispositif d'orientation (41) qui oriente l'extrémité supérieure (18) de chaque conduit terminal (12) vers la paraison (3) qui arrive sur la glissière (11).

10. Structure de conduits selon la revendication 9, caractérisée en ce que chaque dispositif d'orientation (41) présente une fourche (81) qui peut être levée ou abaissée autour d'un axe solidaire de la machine (80),
et en ce que les bras (86, 87) de la fourche (81) sont en contact coulissant avec des surfaces de glissement latérales (89) opposées sur l'extrémité supérieure (18) du conduit terminal (12) correspondant.

11. Structure de conduits selon la revendication 10, caractérisée en ce que seules les extrémités libres (88) des bras (86, 87) sont en contact coulissant avec les surfaces de glissement (89).

12. Structure de conduits selon la revendication 10 ou 11, caractérisée en ce que la fourche (81) peut être réglée dans les directions de l'axe solidaire de la machine (80).

13. Structure de conduits selon l'une ou l'ensemble des revendications 9 à 12, caractérisée en ce que chaque dispositif d'orientation (41) est monté sur la glissière (11) correspondante.

14. Structure de conduits selon l'une ou l'ensemble des revendications 1 à 13, caractérisée en ce qu'il existe à une extrémité supérieure (18) du conduit terminal (12) une fente en forme de coin (95) orientée vers la surface extérieure (94) opposée de la paraison (3) et qui s'élargit vers l'extrémité supérieure (18) du conduit terminal (12).

15. Structure de conduits selon la revendication 14, caractérisée en ce qu'une zone de contact (93 ; 96) dans laquelle la paraison (3) vient d'abord en contact avec le conduit terminal (12) se situe entre la moitié et les deux tiers de la longueur de la paraison (3) après l'extrémité supérieure (18) du conduit terminal (12).

16. Structure de conduits selon l'une ou l'ensemble des revendications 1 à 15, caractérisée en ce que du fait d'une courbure appropriée d'une surface de glissement intérieure (20) du conduit terminal (12) le long d'une trajectoire (14) de l'axe longitudinal de la paraison (3) dans le conduit terminal (12), il est prévu dans le sens de déplacement de la paraison (3) trois segments (106 à 108; 113 à 115) caractéristiques, se succédant sans transition, de l'accélération normale agissant sur la paraison (3), l'accélération normale augmentant dans le premier segment (106 ; 113) d'une valeur initiale (109), dans une zone de contact (93 ; 96) dans laquelle la paraison (3) entre d'abord en contact avec le conduit terminal (12), à une valeur haute (110),
l'accélération normale se maintenant au moins approximativement à la valeur haute (110) dans le deuxième segment (107 ; 114),
et l'accélération normale diminuant dans le troisième segment (108 ; 115) de la valeur haute (110) à une valeur finale (111) à l'extrémité inférieure (22) du conduit terminal (12).

17. Structure de conduits selon la revendication 16, caractérisée en ce que la machine à mouler le verre à sections individuelles (97 ; 101) présente un plan transversal médian (98) et en ce que :
a) lorsque le nombre total de sections (6) de la machine à mouler le verre à sections individuelles (97) est pair dans les deux sections centrales (99, 99) de part et d'autre du plan transversal médian (98), ou
b) lorsque le nombre total de sections (6) de la machine à mouler le verre à sections individuelles (101) est impair dans la section centrale (102) dans le plan transversal médian (98) et les deux sections voisines (103, 103) de part et d'autre de la section centrale (102),
dans chaque conduit terminal (12), les trois segments (106 à 108) présentent les longueurs relatives suivantes, par rapport à la longueur totale de la trajectoire (14) de l'axe longitudinal de la paraison (3) en contact avec le conduit terminal (12) qui est supposée être de 100 % :
le premier segment (106) s'étend de la zone de contact (93 ; 96) jusqu'à 23 à 29 %, de préférence 26 %,
l'extrémité postérieure du deuxième segment (107) se situe entre 34 et 40 %, de préférence 37 %,
et le troisième segment (108) s'étend sur le reste de la longueur totale.

18. Structure de conduits selon la revendication 17, caractérisée en ce que :
a) lorsque le nombre total de sections (6) de la machine à mouler le verre à sections individuelles (97) est pair dans les sections suivantes (100, 100) qui font suite à chacune des deux sections centrales (99, 99) vers l'extérieur, ou
b) lorsque le nombre total de sections (6) de la machine à mouler le verre à sections individuelles (101) est impair dans les sections suivantes (104, 104) qui font suite à chacune des deux sections voisines (103, 103) vers l'extérieur,
dans chaque conduit terminal (12), les trois segments (113 à 115) présentent les longueurs relatives suivantes, par rapport à la longueur totale de la trajectoire (14) de l'axe longitudinal de la paraison (3) en contact avec le conduit terminal (12) qui est supposée être de 100 % :
le premier segment (113) s'étend de la zone de contact (93 ; 96) jusqu'à 32 à 42 %, de préférence 37 %,
l'extrémité postérieure du deuxième segment (114) se situe entre 62 et 72 %, de préférence 67 %,
et le troisième segment (115) s'étend sur le reste de la longueur totale.

19. Structure de conduits selon l'une ou l'ensemble des revendications 16 à 18, caractérisée en ce que la valeur initiale (109) de l'accélération normale est comprise entre 9 et 20 % de la valeur haute (110) de celle-ci.

20. Structure de conduits selon l'une ou l'ensemble des revendications 16 à 19, caractérisée en ce que la valeur finale (111) de l'accélération normale est comprise entre 15 et 19 % de la valeur haute (110) de celle-ci.
